# EUROPEAN PATENT APPLICATION

(11) **EP 1 870 237 A1**
(43) Date of publication of application: **26.12.2007**
(21) Application number: 06730141.6
(22) Date of filing: 27.03.2006
(51) Int. Cl.: B32B 27/36, B65D 65/40

(54) **POLYGLYCOLIC ACID RESIN-BASED LAYERED SHEET AND METHOD OF PRODUCING THE SAME**

(30) Priority: 28.03.2005 JP 2005090586
(71) Applicant: Kureha Corporation, Tokyo 103-8552 (JP)
(72) Inventor: HOKARI, Yuki c/o Research Center, Kureha Corporation,, Fukushima 974-8686 (JP); YAMANE, Kazuyuki c/o Research Center, Kureha Corporation,, Fukushima 974-8686 (JP); WAKABAYASHI, Juichi c/o Kureha Corporation, Tokyo 103-8552 (JP); SUZUKI, Takehisa c/o Kureha Corporation, Tokyo 103-8552 (JP)
(74) Representative: de Lang, Robbert-Jan
(86) International application number: PCT/JP2006/306193
(87) International publication number: WO 2006/104114

(57) **Abstract**

There is provided a laminate sheet which is excellent in oxygen-barrier property and moisture resistance, biodegradable as a whole and therefore suitable as a base material for packaging materials, such as food containers. The laminate sheet is formed by laminating a water-containable and biodegradable polymer substrate sheet or a precursor thereof in a water-containing state with a layer of polyglycolic acid resin having a residual monomer content below 0.5 wt.% to form a laminate, and subjecting the laminate to bonding and forming under heat and pressure.

## Description

### TECHNICAL FIELD

The present invention relates to a paper-like multilayer sheet suitable for use as, e.g., a material for cups used for food and beverages, such as coffee, soup, Miso-soup, snack candies and noodles, or a material for trays used for pizza, daily dishes, foods for microwave oven, etc.

### BACKGROUND ART

Multilayer sheets formed by laminating a synthetic resin onto substrate materials, such as paper and cloth, which are biological (or living thing-originated) natural polymer materials, are used for various purposes. (Herein, such substrate materials including paper and materials having like properties are inclusively referred to as "biological polymer substrate (sheets)".)

For example, paper-made containers, such as paper cups and paper trays, used for food and beverages have been formed by laminating a polyolefin composition as a water-repellent or an oil-repellent layer onto at least one side of a paper-like substrate containing contents, such as liquids or oily food.

In conventional processes for producing materials for paper-made containers, such as paper cups or paper trays, the lamination has to be performed at high temperatures of 300°C or higher in order to ensure close contact and adhesion of the polyolefin composition as a water-repellent or an oil-repellent layer with paper. Accordingly, the polyolefin is degraded by oxidation to result in residual odor due to the oxidation degradation of the resin composition in the paper laminate, and generation of smoke in a large quantity in the lamination step, leading to problems, such as deterioration of the operation environment and pollution of the surrounding environment.

The paper cups, paper trays, etc., after the use cannot be decomposed even embedded in the earth to pollute the environment because of the lamination of polyolefin composition lacking degradability with microorganisms or hydrolyzability. Accordingly, a composition for a water-repellent layer or an oil-repellent layer capable of biological degradation along with paper has been intensely demanded.

For complying with such demands, various proposals have been made regarding food containers which comprise a multilayer sheet obtained by forming a various biodegradable resin layer on a paper-like substrate and result in little load to the environment at the time of disposal thereof. For example, there have been proposed a laminate material formed by melt-extrusion coating of an aliphatic polyester resin comprising a glycol and an aliphatic polycarboxylic acid onto a substrate (Patent document 1 listed below), a laminate material formed by melt-pressing or application of an organic solution of polylactic acid or a copolymer thereof onto a substrate (Patent document 2 below), a laminate material formed by adhesion with an adhesive such as gelatin, melt-pressing or application of an organic solution of polylactic acid or a copolymer of lactic acid and an oxycarboxylic acid (Patent document 3 below), and a laminate material formed by hot lamination of an ester-type biodegradable resin with a polyester-based adhesive onto a substrate (Patent document 4 below).

As a laminate sheet of a biological polymer substrate sheet layer and a various biodegradable resin layer, there has been also proposed a laminate sheet of a starch foam and a film or sheet of a moisture-resistant resin including a biodegradable resin, and as a process for production thereof, there has been proposed a process of heating under pressure a laminate of a film or sheet of a moisture-resistant resin and water-containing starch particles (starch slurry) in a mold to cause foaming of the water-containing starch particles, thereby forming a contain comprising a laminate sheet of a starch foam sheet and a moisture-resistant film, etc. (Patent document 5 below).

On the other hand, food containers are required to show a function of preventing degradation of food contents during storage thereof due to permeation of oxygen or moisture. For imparting the property to paper-based food containers, it has been proposed to dispose a barrier layer of special polymethallyl alcohol on a paper-like substrate (Patent document 6 shown below), but in this case, the product is not likely to be a biodegradable container.
Patent document 1: JP-A 6-171050,
Patent document 2: JP-A 4-334448,
Patent document 3: JP-A 4-336246,
Patent document 4: JP-A 6-316042,
Patent document 5: JP-A 2002-173182
Patent document 6: JP-A 11-91016.

### DISCLOSURE OF INVENTION

Accordingly, a principal object of the present invention is to provide a laminate sheet with biodegradability and good barrier property by laminating a biodegradable resin layer onto a biological polymer substrate.

The present inventors proceeding with application and development of polyglycolic acid resin had arrived, from some earlier time, at a concept that it would be effective to laminate a polyglycolic acid resin layer having excellent barrier property onto a biological polymer substrate in order to accomplish the above-mentioned object. However, polyglycolic acid resin is a high-melting point resin having a melting point of at least 200°C, which leads to a problem that the hot lamination (as disclosed in the above Patent documents 1 - 3) of the resin onto a biological polymer substrate is difficult. Nevertheless, the formation of an adhesive layer by application using an organic solvent as taught by Patent documents 2 - 4 above, on the other hand, leaves a problem of residual solvent and is not desirable for provision of a food container-forming material.

On the other hand, it may be possibly conceived of using a polyglycolic acid resin layer as such a moisture-resistant film, etc., in the above-mentioned process of Patent document 5 of heating under pressure a laminate of water-containing starch particles and a moisture-resistant film, etc., in a mold to cause foaming of the water-containing starch particles, thereby forming a laminate sheet of a starch foam sheet and a moisture-resistant film, etc. However, in order for a polyglycolic acid resin to exhibit a good barrier property, it has to contain a higher proportion of at least 70 wt.% of - OCH₂CO-recurring unit, but such a polyglycolic acid resin is highly hydrolyzable, so that it has been considered impossible at all to achieve a lamination thereof under heating and pressure with a water-containing resin layer, such as a water-containing starch particle layer. However, as a result of further study by the present inventors, et al., it has been discovered that the hydrolysis of polyglycolic acid resin is concerned with residual monomer (glycolide) therein so that the hydrolysis is accelerated at a higher residual monomer and, partly because the conditions for production of polyglycolic acid resin have not been sufficiently clarified, conventional polyglycolic acid resin has contained residual monomer (glycolide) at an excessive amount of 0.5 wt.% or larger, which has provided a cause for polyglycolic acid resin to exhibit a low moisture-resistance. On the other hand, the present inventors, et al., have succeeded in production of a polyglycolic acid resin having a low residual monomer content of below 0.5 wt.% by a combination of solid phase polymerization and residual monomer removal treatment (WO 2005/090438A1), and the present inventors have confirmed that if such a polyglycolic acid resin having such a low residual monomer content and a moderate degree of moisture resistance is used, the laminate thereof with a water-containing resin layer, when subjected to pressure bonding under heating, develops a good adhesiveness therebetween, thereby allowing the development of a novel laminate sheet exhibiting biodegradability and good barrier property.

Based on the above findings, the polyglycolic acid resin-based laminate sheet of the present invention, comprises: a heat and pressure-bonded laminate of a water-containable and biodegradable polymer substrate sheet and a layer of polyglycolic acid resin having a residual monomer content below 0.5 wt.%.

Accordingly, the present invention also provides a process for producing the above-mentioned laminate sheet comprising: laminating a water-containable and biodegradable polymer substrate sheet or a precursor thereof in a water-containing state with a layer of polyglycolic acid resin having a residual monomer content below 0.5 wt.% to form a laminate, and subjecting the laminate to bonding and forming under heat and pressure.

### BEST MODE FOR PRACTICING THE INVENTION

Hereinbelow, the present invention will be described more specifically with reference to preferred embodiments thereof.

### (Water-containable and biodegradable polymer substrate sheet)

The polyglycolic acid resin-based laminate sheet according to the present invention is formed from a water-containable and biodegradable polymer substrate sheet that is a substrate sheet which comprises a biodegradable polymer and is water-containable. As the biodegradable polymer, natural polymers originate from living things inclusive of plants and animals, or derivatives thereof, may be used, but they can contain a synthetic polymer (e.g., vinyl acetate resins, such as vinyl alcohol resin and ethylene-vinyl acetate copolymer resin, and vinyl-pyrrolidone resin) within an extent of not obstructing biodegradability of the substrate sheet as a whole.

More specifically, examples of the natural polymers originated from plants may include: celluloses, such as cellulose and hemicellulose, contained richly in wood and plants, various starches comprising a variety of combinations of amylose and amylopectin, other polysaccharides, and lignins, and also include chemically modified products of polysaccharides and lignins, such as cellulose acetate. Further, animal starches such as glycogen, and animal polysaccharides such as chitin and chitosan, can also be used singly or together with natural polymers originated from plants.

The term "water-containable" in the water-containable and biodegradable natural polymers used in the present invention refers to a degree of water-containability capable of retaining water in an amount of at least 30 wt.% thereof without causing phase separation in a state of forming a substrate or in a resinous state as a precursor before formation into a substrate sheet at least in a state being held within an appropriate vessel. The biological polymer substrate sheet which is water-containable in the state of a substrate sheet may for example include paper comprising biological polymer fiber in an entangled form. When the use thereof for food containers is considered, the paper may preferably have a basis weight of 5 - 500 g/m², particularly 20 - 300 g/m². Further, a preferred example of water-containable and biodegradable precursor of polymer substrate sheet may be starch particles which are a precursor of a foam starch sheet that is a preferred example of the water-containable and biodegradable polymer substrate sheet used in the present invention.

In order to show a good adhesiveness with a polyglycolic acid resin layer, the biodegradable polymer may preferably be in a state of containing water with respect to at least a portion thereof and in a state of functioning as a so-called glue-like adhesive. Such a water-containing adhesive is used by itself or in the state of impregnating paper-like substrate sheet for heat-pressure bonding and forming with a polyglycolic acid resin layer.

### (Polyglycolic acid resin)

The polyglycolic acid resin (hereinafter sometimes referred to as "PGA resin") used in the present invention includes homopolymer of glycolic acid (including a ring-opening polymerization product of glycolide (GL) that is a bimolecular cyclic ester of glycolic acid) consisting only of glycolic acid recurring unit represented by a formula of: -(-O-CH₂-CO-)-(1), and also a glycolic acid copolymer containing at least 70 wt.% of the above-mentioned glycolic acid recurring unit.

Examples of comonomer providing polyglycolic acid copolymer together with a glycolic acid monomer, such as the above-mentioned glycolide, may include: cyclic monomers, such as ethylene oxalate (i.e., 1,4-dioxane-2,3-dione), lactides, lactones (e.g., β-propiolactone, β-butyrolactone, pivalolactone, γ-butyrolactone, δ-valerolactone, β-methyl-δ-valerolactone, and ε-caprolactone), carbonates (e.g., trimethylene carbonate), ethers (e.g., 1,3-dioxane), either esters (e.g., dioxanone), amides (ε-caprolactam); hydroxycarboxylic acids, such as lactic acid, 3-hydroxypropanoic acid, 3-hydroxybutanoic acid, 4-hydroxybutanoic acid and 6-hydroxycaproic acid, and alkyl esters thereof; substantially equi-molar mixtures of aliphatic diols, such as ethylene glycol and 1,4-butanediol, with aliphatic dicarboxylic acids, such as succinic acid and adipic acid, or alkyl esters thereof; and combinations of two or more species of the above.

The content of the above-mentioned glycolic acid recurring unit in the PGA resin is at least 70 wt.%, preferably at least 90 wt.%. If the content is too small, it becomes difficult to attain a gas barrier property-improving effect expected of the PGA resin. Within this extent, the PGA resin may comprise 2 or more species of polyglycolic acid (co-)polymers.

The PGA resin may preferably have a weight-average molecular weight (based on polymethyl methacrylate) in a range of 30,000 - 600,000, according to GPC measurement using hexafluoroisopropanol solvent. If the weight-average molecular weight is too low, the PGA resin layer is liable to be damaged when the multilayer sheet formed by lamination with, e.g., paper, of the present invention is used after bending it into, e.g., a box. Too large a weight-average molecular weight results in an increase in melt viscosity during processing, a liability of coloring or decomposition of the resin or a difficulty in formation of a thin layer of PGA resin, thus a multilayer sheet of a small thickness as a whole.

In order to provide the PGA resin with a practical moisture resistance so as to prevent premature decomposition thereof even during lamination with a layer of aqueous adhesive as described hereinafter, it is preferred to suppress the residual glycolide content of the PGA resin. More specifically, it is required that the residual glycolide content is below 0.5 wt.%, preferably at most 0.3 wt.%, more preferably at most 0.2 wt.%. In order to obtain a PGA resin with such a small residual glycolide content, it is preferred to adopt a process for producing a PGA resin comprising producing a PGA resin by ring-opening polymerization of glycolide, wherein a latter period of the polymerization is proceeded with by way of solid-phase polymerization, and the resultant PGA resin is subjected to removal of residual glycolide by release to a gaseous phase (See WO 2005/090438A1). By adjusting the residual glycolide content through such a process, it becomes possible to adjust the biological degradation period of the PGA resin layer in the resultant laminate sheet and thus the packaging material. Further, by using such a PGA resin having a reduced residual glycolide content, even if the PGA resin sheet is laminated with a water-containing and biodegradable polymer substrate sheet and subjected to heat-pressure bonding at a relatively high temperature (80 - 220°C) where water is liable to evaporate, a laminate sheet retaining a PGA resin layer can be formed so as to be free from impairment of the laminate state or undesirable lowering in molecular weight of the PGA resin even after storage for 2 months in a room temperature environment (23°C, 90 % relative humidity) in consideration of commercial circulation, etc., of the laminate sheet as a packaging material.

Separately from the reduction in residual glycolide content or in combination therewith, stretching orientation of molecular chains of the PGA resin is also effective for improving the moisture resistance of the PGA resin layer. The stretching orientation may preferably be performed at a temperature of 25 - 120°C, particularly preferably 40 - 70°C and at a ratio of at least 2 times, preferably at least 4 times, particularly preferably at least 6 times, most preferably 8 times or more, in terms of a thickness ratio of the PGA resin layer. As a result thereof, PGA molecular chains are tightly oriented to improve the moisture resistance of the PGA resin layer. If the stretching ratio is below 2, the effect is scarcely developed. The upper limit, while it may depend on the stretching conditions and the molecular weight, etc., is generally at most 20 times. Stretching at a ratio in excess of 20 times is liable to cause breakage of the PGA resin layer. The stretching of the PGA resin layer may ordinarily be performed prior to lamination with a biological polymer substrate sheet, but it is sometimes preferred to perform the stretching of the PGA resin layer after lamination with a layer of another biodegradable resin in order to facilitate the stretching at a high ratio. It is preferred to subject the PGA resin layer after stretching to a heat treatment under tension or relaxation condition.

### (Polyglycolic acid resin layer)

The PGA resin layer as an essential component of the laminate sheet according to the present invention is preferably composed of the above-mentioned polyglycolic acid resin alone but can be formed of a mixture thereof with another biodegradable resin or another thermoplastic resin within an extent of retaining biodegradability as a whole as far as the above-mentioned glycolic acid recurring unit content is at least 70 wt.%, preferably at least 90 wt.%. The above-mentioned content range should be observed since the barrier property is liable to be lowered as the glycolic acid recurring unit content is decreased. A thermal stabilizer, a plasticizer, a lubricant, etc., may be added as desired depending on the purpose thereof, but the amount and species thereof should be adjusted within an extent of not impairing the object of the present invention since the addition can affect the lamination adhesiveness in some cases.

The PGA resin layer may preferably be formed in a thickness in a range of ordinarily several µm to 5,000 µm, particularly 10 - 1,000 µm. Too small a thickness is liable to result in shortage of strength and barrier property, and too large a thickness is liable to lead to inferiority in secondary processing, such as bending, of the resultant laminate sheet.

### (Heat-pressure bonding and forming)

The polyglycolic acid resin-based laminate sheet of the present invention can be obtained by laminating a polyglycolic acid resin layer comprising a polyglycolic acid resin as described above and a water-containable and biodegradable polymer substrate sheet or a precursor thereof in a water-containing state to form a laminate, and heat-pressure bonding and forming.

As briefly described before, examples of the water-containable and biodegradable polymer substrate sheet in a water-containing state include paper comprising a biodegradable polymer and impregnated with a water-containing adhesive, and also a water-containing resin adhesive alone.

In a preferred embodiment of the present invention, a water-containing biodegradable polymer adhesive is used as the water-containable and biodegradable polymer in a water-containing state and is laminated with a polyglycolic acid resin layer, followed by heat-pressure bonding and forming. During the heat-pressure bonding and forming, water is evaporated off from the adhesive to cause the adhesive to foam and simultaneously adhere to the polyglycolic acid resin layer, thereby forming an adhesive foam layer directly on the polyglycolic acid resin layer. Suitable examples of the water-containable biodegradable polymer adhesive may include: starch, processed starch, and cellulose derivatives such as cellulose acetate.

The conditions for the heat-pressure bonding and forming may include a temperature of 80 - 220°C, further 80 - 180°C, a pressure of 0.1 - 10 MPa (gauge pressure) and a time of less than 2 min.; particularly 120 - 150°C, 0.1 - 2 MPa and less than 30 sec. If the heat-pressure bonding and forming time is too long, the PGA resin is liable to hydrolyze. A time of 1 - several sec. can be adopted if a desired adhesive strength is attained. If water is added to PGA resin and heated to a high temperature, a lowering in molecular weight is liable to occur in ordinary cases. However, under the above-mentioned conditions, the molecular weight lowering is hardly caused as the water is mostly vaporized at the time of foaming of the water-containing adhesive.

If the above-mentioned heat-pressure bonding and forming is applied to a water-containing adhesive in a state of lamination with a polyglycolic acid resin layer (in the form of a film, or a sheet (or a form)) placed in a mold, the laminate sheet of the present invention is obtained simultaneously with the provision of a form product of a container, such as a cup. Thus, according to this process, the production steps can be simplified.

Additives, such as a strength improver can be added, as desired, to the water-containing biodegradable adhesive. Examples of the strength improver may include: saccharides, such as D-glucose and maltose; thickened polysaccharides, such as xanthane gum, guar gum, gardran and 'konnyaku' mannan; celluloses, such as pulp, sugar alcohol, sugar ester, oil and fat, and hydrocarbon resins. Further, it is possible to add calcium carbonate, magnesium carbonate, sodium carbonate, talc, silica fine powder, etc., as a foam-nucleating agent, and calcium stearate, magnesium stearate, stearic acid, etc., as a foaming aid.

The water-containing adhesive may suitably be applied at a rate of ca. 20 - 300 g/m², particularly ca. 50 - 150 g/m², as resin (solid matter).

In case where paper impregnated with a water-containing adhesive is used as the water-containable and biodegradable polymer substrate sheet in a water-containing state, the impregnated paper may be superposed with a PGA resin layer, and they may be subjected to heat-pressure bonding and forming. The heat-pressure bonding and forming conditions may be similar to those described above.

The water-containing adhesive may include: an aqueous solution, an aqueous dispersion and a mixture with water of an adhesive resin. More specifically, they may include: starch glue comprising an aqueous solution or aqueous dispersion of starch, an aqueous emulsion of a vinylpyrrolidone-based resin, an aqueous solution of vinyl alcohol-based resin, and an aqueous emulsion of a vinyl acetate-based resin such as ethylene-vinyl acetate copolymer. Among these, starch glue, aqueous emulsion of vinylpyrrolidone-based resin and aqueous solution of vinyl alcohol-based resin having biodegradability are preferred because they can provide a completely biodegradable laminate sheet as a whole. Starch glue is particularly preferably used because of economical inexpensiveness.

These water-containing adhesives may preferably be used for impregnation at a rate of ca. 10 - 1500 g/m², particularly ca. 50 - 500 g/m², as resin (solid matter).

### (Another biodegradable resin)

In the present invention, it is also possible to use another biodegradable resin in combination with the above-mentioned PGA resin, prior to or after the above-mentioned heat-pressure bonding and forming. Particularly, it is possible to use another biodegradable resin layer in lamination with the above-mentioned PGA resin layer. Examples of another biodegradable resin used for such a purpose may include: polyamino acids inclusive of proteins such as gluten and collagen, and polyesteramides (collagen, polyaspartic acid); polyethers (PEG) such as polyalkylene glycols, water-soluble polyhydric alcohol polymers such as polyvinyl alcohol (PVA); poly (α-oxyacids), such as polylactic acid (e.g., "LACEA" made by Mitsui Kagaku K.K.), poly (ω-oxyacids) such as polyhydroxybutyric acid (P3HB) (e.g., "BIOPOL" made by Monsanto Co.), polylactones such as polycapaolactone (e.g., "CELL GREEN" made by Daicel Kagaku Kogyo K.K.), condensates of at least aliphatic dicarboxylic acids such as succinic acid and glycols (e.g., "BIONOLE" made by Showa Kobunshi K.K.; "GS-Pla" made by Mitsubishi Kagaku K.K.; "BIOMAX" made by Dupont Co.); and these polymers can include a carbonate structure as by copolymerization with, e.g., trimethylene carbonate. These can be structured singly or in combination of two or more species. Among these, polyesters, inclusive of: poly (α-oxyacids) such as polylactic acid ("LACEA"), poly (ω-oxyacids) such as polyhydroxybutyric acid (P3HB) ("BIOPOL"), polycapcolactones such as polycaprolactone ("CELL GREEN"), and condensates of at least aliphatic dicarboxylic acids such as succinic acid and glycols ("BIONOLE", "GS-Pla", " BIOMAX"), are preferred.

In other words, the laminate sheet of the present invention comprises a laminate of a water-containable and biodegradable polymer substrate sheet and a PGA resin layer as a basic structure, but can also include another biodegradable resin layer, as desired. The laminate structure can be versatile to some extent. For example, if a water-containable and biodegradable polymer substrate sheet is denoted by P, a PGA resin layer is denoted by G and another biodegradable resin layer is denoted by B, the representative laminate structures thereof may include: P/G, P/G/B, P/B/G/B, G/P/G, etc. It is also possible to include a printing layer or a hot adhesive layer comprising another biodegradable resin as desired within an extent of not impairing the biodegradability as a whole.

The thus-formed multilayer sheet of the present invention is preferably used as a food container-forming material for an oily food or beverages, etc., for which degradation by oxidation should be avoided, or dry food which is likely to denaturate by moisture adsorption, since the polyglycolic acid resin layer contained therein has excellent gas-barrier property (at least 3 times that of EVOH, which is a typical gas-barrier resin) and excellent water vapor-barrier property.

### EXAMPLES

Hereinbelow, the present invention will be described more specifically based on Examples and Comparative Examples. Physical properties described in the description including Examples below are based on measured values according to the following methods.

### (1) Glycolide content

Ca. 50 mg of a sample PGA resin is dissolved in ca. 1 ml of a dimethyl sulfoxide (DMSO) solution containing 4 - chlorobenzophenone as the internal standard at a concentration of 0.2 mg/ml under heating at 150°C for ca. 10 min., followed by cooling to room temperature and filtration. A portion of the filtrate liquid is injected into a GC apparatus. From values obtained in the measurement, a glycolide content (wt.% in the polymer) is calculated. The GC analysis conditions are as follows:

Apparatus: "GC-2010" made by K.K. Shimadzu Seisakusho. Column: "TC-17" (0.25 mm in diameter × 30 mm in length).
Column temperature: Held at 150°C for 5 min., heated at 270°C at a rate of 20°C/min. and then held at 270°C for 3 min.
Gasification chamber temperature: 180°C
Detector: FID (hydrogen flame ionization detector) at 300°C.

(2) Molecular weight measurement.
Ca. 10 mg of a sample PGA resin or a PGA resin layer in a sample laminate sheet from which a biodegradable polymer substrate sheet layer is removed as completely as possible, is dissolved in 0.5 ml of DMSO under heating at 150°C for 2 min., followed by cooling to room temperature to precipitate PGA. The precipitated PGA is dissolved in solvent hexafluoroisopropanol and diluted to a constant volume of 10 ml. After removing the insoluble matter by filtration, the filtrate liquid is subjected to GPC measurement to determine a weight-average molecular weight (Mw) based on polymethyl methacrylate as the standard.

### <GPC measurement conditions>

Apparatus: "Shodex-104" made by Showa Denko K.K.
Column: Two columns of "HFIP-606M" were connected in series with 1 column of "HFIP-G" as a pre-column.
Column temperature: 40°C
Elution liquid: HFIP solution containing sodium trifluoroacetate dissolved at 5mM.
Flow rate: 0.6 ml/min.
Detector: RI (differential refractive index) detector.
Molecular weight calibration: Effected by using 5 species of standard polymethyl methacrylate having different molecular weights.

### (3) Oxygen permeation constant

An oxygen permeability meter ("MOCON OX-TRAN 2/20" made by Modern Control Co.) was used to measure an oxygen permeation constant under the conditions of 23°C and 80%-relative humidity according to JIS K7126 (constant-pressure method).

### (4) Water vapor permeability

Measured according to JIS K7129 under the conditions of 40°C and 90%-relative humidity.

### (Example 1)

Four 100 µm-thick PGA single-layered pressed sheets (weight-average molecular weight (Mw) of 16 x 10⁴, glycolide content in PGA of 0.2 wt.%) were each loaded with a starch aqueous dispersion containing 56 wt. parts of water per 100 wt. parts of starch at a rate of ca. 1 g/m² (solid matter) and respectively subjected to heat-pressure bonding and forming at 150°C under different pressures and time. Thus, water in the starch aqueous dispersion was evaporated to foam the starch, thereby obtaining 4 types of laminate sheets. In the thus-obtained laminate sheets, the starch layers formed by foaming were found to be well bonded to the polyglycolic acid resin layers.

A portion of each of the thus-obtained laminate sheets was immersed in dimethyl sulfoxide not dissolving starch to dissolve only the PGA layer, and the resultant solution was used as a sample for GPC measurement to obtain a weight-average molecular weight (Mw) based on polymethyl methacrylate.

The laminate sheets subjected to different pressures and time exhibited the following Mw values of PGA:
- 10 MPa, 2 min. :: ca. 5 x 10⁴
- 10 MPa, 1 min. :: ca. 9.5 x 10⁴
- 10 MPa, 5 sec. :: ca. 14.5 x 10⁴
- 5 MPa, 5 sec. :: ca. 13.5 x 10⁴

### (Example 2)

Heat-pressure bonding and forming was performed under two sets of conditions of 150°C, 10 MPa - 20 sec. and 5 MPa - 5 sec. in the same manner as in Example 1 except for changing the water content in starch aqueous dispersions as shown in the following table in the range of 0 wt. part to 150 wt. parts per 100 wt. parts of starch. The resultant laminate sheets were evaluated with respect to the state of foaming and state of bonding with PGA layer of the starch layer and subjected to measurement of Mw of the PGA layer. The results are shown in the following Table 1.

**Table 1**

| Water content (parts/starch 100 parts) | 150°C, 10MPa, 20sec. | | 150°C, 5MPa, 5sec. | |
|---|---|---|---|---|
| | state | Mw(×10⁴) | state | Mw(×10⁴) |
| 0 part | not foamed/not bonded | - | - | - |
| 28 parts | insufficient foaming/bonded | - | not foamed/bonded | - |
| 56 parts | foamed/bonded | 11.5 | foamed/bonded | 14 |
| 100 parts | foamed/bonded | 12 | foamed/bonded | 13.5 |
| 150 parts | foamed/bonded | 12 | foamed/bonded | 13.7 |

In the case of less water content, foaming was insufficient and bonding did not occur between starch/PGA, thus failing to provide laminate sheets. However, in the cases of water contents of 56 wt. parts or more, foaming and bonding occurred to provide good laminate sheets. Further, even at larger water contents, substantially no increase in lowering of PGA molecular weight was recognized.

### <Barrier property test examples>

The laminate sheet obtained under heat-pressure bonding and forming conditions of 150°C, 5 MPa and 5 sec. was subjected to measurement of oxygen permeation rate and water vapor permeation rate while the PGA layer side on the high oxygen or high water vapor side, whereby values of 1.2 cc/m²/day/atom and 3.0 g/m²/day were obtained, respectively.

For the purpose of comparison, a laminate sheet having a similar layer structure as the above except for using a 25 µm-thick film of polylactic acid (PLA) ("LACEA", made by Mitsui Kagaku K.K.) instead of the PGA layer was subjected to measurement of oxygen permeation rate and water vapor permeation rate while the polylactic acid layer side on the high oxygen or high water vapor side, whereby values of 630 cc/m²/day/atom and 370 g/m²/day were obtained, respectively.

### (Example 3)

A 20 µm-thick PGA single-layered film (Mw = 18 x 10⁴, glycolide content in PGA = 0.08 wt.%) was placed on a craft paper sheet (thickness: 65 µm, 65 g/m²) and subjected to heat-pressure bonding and forming at 220 °C and a pressure of 1 MPa for 5 sec. In the resultant laminate sheet, the PGA layer was well bonded to the paper layer.

A portion of the thus-obtained laminate sheet was immersed in dimethyl sulfoxide not dissolving paper to dissolve only the PGA layer, and the resultant solution was used as a sample for GPC measurement to obtain a weight-average molecular weight (Mw) based on polymethyl methacrylate. As a result, PGA in the laminate sheet showed Mw of ca. 17.6 x 10⁴.

### (Example 4)

A craft paper sheet (thickness = 65 µm, 65 g/m²) was coated with a starch-based aqueous paste ("YAMATO-NORI", made by Yamato K.K.) at a rate of 25 mg/cm² and, immediately thereafter, a 20 µm-thick PGA single-layered film (Mw = 18 x 10⁴, glycolide content in PGA of 0.08 wt.%) was placed on the starch paste-coated layer, followed by heat-pressure bonding and forming under a pressure of 1 MPa for 10 sec. at 200°C. In the laminate sheet, the polyglycolic acid layer and the paper layer exhibited good bonding with each other.

A portion of the thus-obtained laminate sheet was immersed in dimethyl sulfoxide not dissolving paper or starch to dissolve only the PGA layer, and the resultant solution was used as a sample for GPC measurement to obtain a weight-average molecular weight (Mw) based on polymethyl methacrylate. As a result, PGA in the laminate sheet showed Mw of ca. 16.8 x 10⁴.

### INDUSTRIAL APPLICABILITY

As described above, according to the present invention, a polyglycolic acid resin layer showing excellent barrier property in addition to biodegradability is laminated by heat-pressure bonding with a water-containable and biodegradable polymer substrate sheet to provide a polyglycolic acid resin-based laminate sheet showing excellent barrier property as well as biodegradability as a whole, which is very suitable for formation of a packaging material for, e.g., food containers, etc.

## Claims

1. A polyglycolic acid resin-based laminate sheet, comprising a heat and pressure-bonded laminate of a water-containable and biodegradable polymer substrate sheet and a layer of polyglycolic acid resin having a residual monomer content below 0.5 wt.%.

2. A laminate sheet according to Claim 1, wherein the water-containable and biodegradable polymer substrate sheet is in a foamed state.

3. A laminate sheet according to Claim 1 or 2, wherein the water-containable and biodegradable polymer substrate sheet comprises a water-containable adhesive resin.

4. A laminate sheet according to Claim 1 or 2, wherein the water-containable and biodegradable polymer substrate sheet comprises a porous biological polymer substrate sheet impregnated with a water-containable adhesive resin.

5. A laminate sheet according to Claim 4, wherein the porous biological polymer substrate sheet comprises paper.

6. A laminate sheet according to any one of Claims 3 - 5, wherein the water-containable adhesive resin comprises starch.

7. A laminate sheet according to any one of Claims 1 - 6, wherein the polyglycolic acid resin has a residual monomer content of at most 0.3 wt.%.

8. A laminate sheet according to any one of Claims 1 - 7, wherein the polyglycolic acid resin comprises a glycolic acid (co-)polymer containing at least 70 wt.% of-OCH₂CO-recurring unit.

9. A laminate sheet according to Claim 8, wherein the polyglycolic acid resin has a molecular weight (Mw) of 30,000 - 600,000.

10. A laminate sheet according to any one of Claims 1 - 9, wherein the polyglycolic acid resin layer has been stretch-oriented.

11. A laminate sheet according to any one of Claims 1 - 10, showing an oxygen permeability constant of at most 8 cc/m²/day/atm as measured at a temperature of 23°C and a relative humidly of 80 %.

12. A laminate sheet according to any one of Claims 1-11, showing a water vapor permeability of at most 25 g/m²/day as measured at a temperature of 40°C and a relative humidity of 90 %.

13. A process for producing a laminate sheet according to any one of Claims 1 - 12, comprising: laminating a water-containable and biodegradable polymer substrate sheet or a precursor thereof in a water-containing state with a layer of polyglycolic acid resin having a residual monomer content below 0.5 wt.% to form a laminate, and subjecting the laminate to bonding and forming under heat and pressure.

14. A production process according to Claim 13, wherein water-containing starch particles as a precursor of the water-containable and biodegradable polymer substrate sheet in a water-containing state are laminated with the polyglycolic acid resin layer and bonded under heat and pressure to the polyglycolic acid resin while foaming the starch, thereby forming a laminate sheet of the starch foam sheet layer and the polyglycolic acid resin layer.

15. A packaging container comprising a laminate sheet according to any one of Claims 1 - 12.
